# EUROPÄISCHE PATENTSCHRIFT

(11) **EP 0 689 958 B1**
(45) Veröffentlichungstag und Bekanntmachung des Hinweises auf die Patenterteilung: **25.11.1998**
(21) Anmeldenummer: 95108554.7
(22) Anmeldetag: 03.06.1995
(51) Int. Cl.: B60P 7/13

(54) **Festlegevorrichtung zum Verriegeln von Ladebehältern**
Fixing device for locking containers
Dispositif de positionnement pour verrouiller des conteneurs

(30) Priorität: 29.06.1994 DE 4422405
(43) Veröffentlichungstag der Anmeldung: 03.01.1996
(73) Patentinhaber: Talbot GmbH & Co. KG, 52070 Aachen (DE)
(72) Erfinder: Tandetzki, Hans, D-52134 Herzogenrath (DE)

(56) Entgegenhaltungen:
- DE-A- 3 538 892
- DE-U- 9 317 501
- US-A- 4 626 155

## Beschreibung

Die Erfindung bezieht sich auf eine Festlegevorrichtung zum Verriegeln von Ladebehältern, das sind z. B. ISO-Container, Wechselbehälter oder -aufbauten und dgl.

Aus US-A-4,626,155 ist eine automatische Festlegevorrichtung mit den Merkmalen des Oberbegriffs des Patentanspruchs 1 bekannt. Ihr verdrehbarer Kopf ("twist-lock") wird durch Federkraft in seiner Sperrstellung gehalten. Er ist deshalb sowohl beim Aufsetzen als auch beim Abnehmen eines Ladebehälters durch Einwirken des Randes einer Öffnung in einem Eckbeschlag des Ladebehälters auf obere bzw. untere Anlaufschrägen des Kopfes nur vorübergehend selbsttätig in die Freigabestellung verdrehbar. Als Rückstellfeder dient eine ElastomerScheibenfeder, die in der festen Basis oder Riegelplatte der Vorrichtung angeordnet ist. Die Bauhöhe der Basis ist wegen des notwendigen Einbauraums für die Feder relativ groß. Eine Kombination dieser Festlegevorrichtung mit einer schwenkbaren Riegelplatte ist nicht offenbart.

Bei einer aus DE 17 55 077 A1 bekannten, auch auch als "Twist-Lock" bezeichneten Riegeleinrichtung bietet der formschlüssige Eingriff von Hinterschneidungen bzw. unterseitigen Vorsprüngen des verdrehbaren Riegelkopfes in den zugehörigen Eckbeschlag des Ladebehälters eine hohe Sicherheit gegen ungewolltes Lösen oder Abheben.
Bei solchen handbetätigten Dreh-Verriegelungen hängt aber die Transportsicherheit wesentlich von der Sorgfalt des Bedienpersonals ab, das sämtliche Verriegelungen vor Fahrtbeginn einzeln in Verriegelungsstellung bringen und vor dem Abladen auch wieder lösen muß. Bei Straßentransporten mit höchstens acht zu betätigenden Riegeln an Zugfahrzeug und Hänger ist der Zeitaufwand hierzu noch vertretbar, jedoch nicht bei Ganzzügen der Eisenbahn mit großen Mengen von aufgesetzten Ladebehältern und einer entsprechend großen Zahl von Riegelzapfen.

Es wurde auch schon eine Festlegevorrichtung dieser Art beschrieben (DE 24 15 165 C2), bei der ein Antrieb zum Drehen des Riegelkopfes vorgesehen ist. Mehrere Verriegelungen können damit über eine zentrale Steuerung gleichzeitig betätigt werden. Jedoch bringt eine solche Fernbetätigung einen erhöhten Bau- und Wartungsaufwand (Steuer- und Druckleitungen sowie deren Verbindungen von Fahrzeug zu Fahrzeug) und damit erhöhte Kosten mit sich.

Die Hinterschneidungsflächen der letzterwähnten verdrehbaren Riegelköpfe verlaufen senkrecht zu deren Drehachsen, also parallel zur Ladefläche des Transportfahrzeugs.

Schließlich beschreibt die DE 30 23 514 A1 Riegelzapfen zum Festlegen von Containern, die gegen Federkraft aus ihrer normalen ausgefahrenen Stellung geradlinig versenkt werden können, jedoch unverdrehbar geführt sind. Auch diese Riegelzapfen sind, längs zur Fahrtrichtung des Transportfahrzeugs gesehen, geringfügig hinterschnitten, um ein Abkippen des Ladebehälters bei Auftreten von Seitenkräften zu verhindern. Damit sich die Eckbeschläge beim Abnehmen des Ladebehälters nicht verhaken, sind diese Hinterschneidungen bei einer maximalen Tiefe von 8 mm mit Anlaufschrägen versehen.
Trotzdem -und auch weil diese starren Hinterschneidungen starker Abnutzung unterliegensind schon wiederholt die immer höher und -unbeladen- leichter gebauten Ladebehälter insbesondere bei starkem Seitenwind vom Transportfahrzeug abgekippt. Leere Ladebehälter müssen deshalb auf bestimmten Eisenbahn-Transportrouten zusätzlich mit Seilen gesichert werden.
Ein weiterer gravierender Nachteil dieser bekannten Riegel ist, daß sie mit hoher Positionsgenauigkeit auf dem Fahrzeuguntergestell befestigt werden müssen, damit die festen Hinterschneidungen ihre Wirkung tun können.

Der Erfindung liegt die Aufgabe zugrunde, die Bauhöhe einer Festlegevorrichtung der eingangs genannten Art möglichst niedrig zu halten.

Diese Aufgabe wird erfindungsgemäß mit den kennzeichnenden Merkmalen des Anspruchs 1 gelöst. Die Merkmale der Unteransprüche geben vorteilhafte Weiterbildungen dieses Gegenstands an, während ein nebengeordneter Anspruch sich auf ein mit der erfindungsgemäßen Festlegevorrichtung ausgestattetes Fahrzeug bezieht.

Der Kopf des Riegelzapfens bildet einen Schnappriegel, der beim Aufsetzen und beim Abnehmen eines Widerlagers bzw. Eckbeschlags selbsttätig gegen die Kraft einer in einem Freiraum des Schafts angeordneten Feder vorübergehend in eine Freigabestellung verdrehbar ist. Beim Aufsetzen reicht das Lastgewicht vollkommen aus, diese vorübergehende Verdrehung zu erzwingen.

Damit das auch beim Abnehmen der Last problemlos möglich ist, sind die Unterkanten des Kopfes, die deutlich weiter als die Hinterschneidungen der üblichen, nicht verdrehbaren Riegelköpfe über den Schaftquerschnitt vorspringen, ebenso wie dessen prismatische Oberseite mit Anlaufschrägen zu versehen.

Die Winkel dieser Anlaufschrägen an den Unterkanten sind so auszulegen, daß die Gewichtskraft des Transportfahrzeugs beim vertikalen Abheben eines aufgesetzten Ladebehälters unter Berücksichtigung der trockenen Reibung als Gegenkraft ausreicht, die Köpfe von vier Regelzapfen -an den vier Ecken des Ladebehälters- vorübergehend gleichzeitig zu verdrehen. Man kann ggf. die notwendige zusätzliche Hebekraft dadurch verringern, daß jeder Ladebehälter nur mit je einem dieser Riegelzapfen auf jeder Seite -vorzugsweise diagonal- gesichert wird, während die beiden anderen Riegelzapfen von konventioneller Bauart sein können. Bei einem eventuellen Kippen des Ladebehälters während des Transports laufen die Innenkanten seines Eckbeschlags einseitig gegen die schrägen Vorsprünge der Kopfunterseite an und können dabei die Kraft zum Verdrehen nicht aufbringen.

Als Lastprämisse muß ein leerer und daher leichter Ladebehälter (ISO-Container) bei 50 kN seitlichem Winddruck, angreifend in halber Behälterhöhe, durch die Kombination aus Überschneidung und Anlaufschräge gehalten werden können.

Ein bedeutender Vorteil dieser Riegel-Bauweise ist, daß man in der Fahrzeugfertigung die Toleranzen für die Riegelposition und -abstände, in Ladebehälter-Querrichtung gesehen, großzügiger als für feste, hinterschnittene Riegelzapfen bemessen und damit die Fertigungskosten senken kann.

Durch federnde Rückstellung des Riegelkopfes in seine Verriegelungsstellung erübrigt sich jede bewußte Maßnahme zum Sichern des Ladeguts. Da zwischen Kopf und Schaft nur kleine Verdrehwinkel im Bereich bis etwa 30° auftreten, kann die Rückstellkraft z. B. durch biegeelastische Verformungen eines Federblechs erzeugt werden. Dieses ist einerseits in der Ladefläche bzw. im Untergestell des Transportfahrzeugs gelagert und andererseits mit dem verdrehbaren Kopf verbunden. Selbstverständlich kann auch jede andere geeignete Federbauform verwendet werden.

Für den Nichtgebrauch können auch die erfindungsgemäßen Festlegevorrichtungen in an sich bekannter Weise wegklappbar sein, indem sie auf schwenkbaren Riegelplatten angebracht werden. In der Arbeitsstellung werden diese in ebenfalls bekannter Weise durch Führungsschrägen selbsttätig randseitig z. B. unter einen im Untergestell des Transportfahrzeugs vorgesehenen Haltesteg geführt. Im Unterschied zum Stand der Technik ist hier jedoch keine lösbare Kupplung zwischen dem Kopf und einem Schwenkantrieb notwendig, weil die rückstellende Feder ebenfalls in der Riegelplatte mitgeschwenkt wird.

Weitere Einzelheiten und Vorteile des Gegenstands der Erfindung gehen aus der Zeichnung von Ausführungsbeispielen und deren sich im folgenden anschließender eingehender Beschreibung hervor.

Es zeigen
- Figur 1: eine erste Ansicht einer einzelnen Verriegelung, die aus einem Schaft und einem diesem gegenüber verdrehbaren Kopf besteht, in Querrichtung des Ladebehälters bzw. des Transportfahrzeugs gesehen,
- Figur 2: eine Schnittansicht entsprechend der Linie II-II in Fig. 1 zur Verdeutlichung der federnden Rückstellung im Grundriß der Verriegelung,
- Figur 3: eine gegenüber Fig. 1 um 90° geklappte zweite Ansicht in Längsrichtung des Ladebehälters gesehen und
- Fig. 4: eine alternative Bauform der Federrückstellung, bei der Elastomerfedern die Rückstellkraft erzeugen, in einer Schnittansicht analog zu Fig. 2.

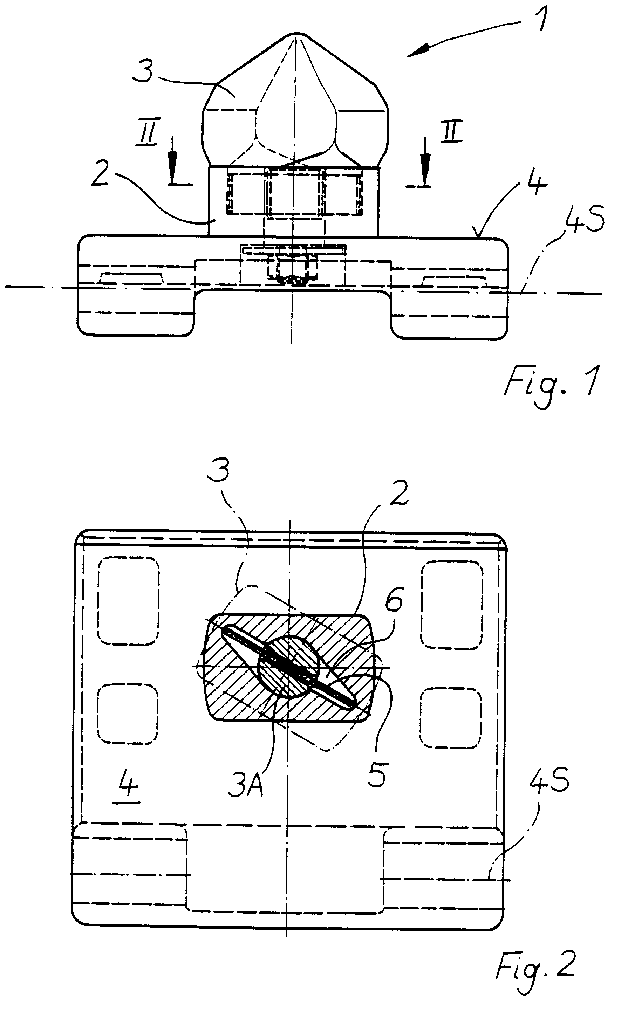

Gemäß **Fig. 1** ist ein Riegelzapfen 1, der im wesentlichen aus einem Schaft 2 und einem verdrehbaren Kopf 3 mit prismatischer oder kegeliger Oberseite besteht, in an sich bekannter Weise auf einer Riegelplatte 4 befestigt. Diese wiederum ist an einem nicht dargestellten Untergestell eines Transportfahrzeugs um eine Schwenkachse 4S schwenkbar gelagert. Damit ist der Riegelzapfen 1 aus seiner Arbeitsstellung, in der er von der Ladefläche des Transportfahrzeugs nach oben ragt, in eine weggeklappte Ruhestellung überführbar.

Im Aufriß-Schnitt gemäß **Fig. 2** ist der Kopf 3 in Grundstellung strichpunktiert um 30° verdreht angedeutet, um zu zeigen, daß er den gleichen Grundriß wie der Schaft 2 hat und daß nur quer zur Fahrzeuglängsrichtung größere Hinterschneidungen vorgesehen sind. Der feststehende Schaft 2 ist hohl, und der Kopf 3 ist darin mit einem durchgesteckten zylindrischen Achszapfen 3A drehbar geführt. Der Kopf 3 ist normalerweise gegenüber dem Schaft 2 verdreht, d. h. seine Grundstellung ist die Verriegelungsstellung.

Zum Einstellen und Beibehalten seiner Verdrehung gegenüber dem Schaft 2 ist eine selbsttätige Rückstellung vorgesehen, die hier bei geringer Bauhöhe in besonders einfacher und montagefreundlicher Weise durch ein biegsames Federblech 5 gebildet wird. Dieses ist einerseits im Schaft 2 bzw. gegenüber der Riegelplatte 4 festgelegt, indem es sich längs einer etwa rautenförmigen Kammer 6 erstreckt. Es kann sich beidseitig in den spitzwinkligen Ecken der Kammer 6 abstützen, durch die der Achszapfen 3A des Kopfes mittig durchgeführt ist. Andererseits ist das Federblech 5 gegenüber dem Kopf 3 festgelegt, indem es eine schlitzförmige Ausnehmung des Achszapfens 3A durchdringt.

Diese Anordnung ist vorteilhaft im verriegelten Normalzustand des Riegelzapfens 1 kraftfrei, d. h. das Federblech 9 ist nicht ständig verspannt. Es setzt nur beim Ladungsumschlag jedem vorübergehenden Verdrehen des Kopfes 3 bzw. des Achszapfen 3A seinen Verformungswiderstand entgegen, wobei durch eine asymmetrische Flügelform der Kammer 6 nur eine Ausdrehrichtung -in dieser Ansicht gegen den Uhrzeigersinn- des Kopfes 3 möglich ist, um ihn in Kongruenz mit dem Schaft 2 zu bringen.

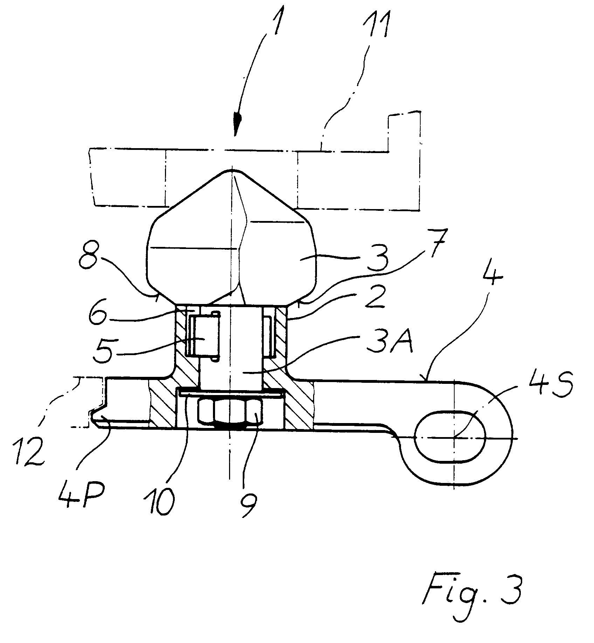

In der gegenüber Fig. 1 um 90° in die Zeichungsebene hineingeklappten Ansicht in **Fig. 3** springen die Unterkanten 7, 8 des Kopfes beidseitig in an sich bekannter Weise deutlich vor und bilden Hinterschneidungen, die im Unterschied zum Stand der Technik mit Anlaufschrägen versehen sind. Ausgehend vom Schaftquerschnitt erstrecken diese sich nur quer zur Längsrichtung des Fahrzeugs bzw. der Ladebehälter. Die Lastprämissen für die von den Hinterschneidungen aufzubringenden Haltekräfte wurden bereits vorstehend erwähnt.

Gegen Herausziehen aus dem Schaft 2 ist der Kopf 3 durch eine auf ein endseitiges Gewinde des Achszapfens 3A aufgeschraubte Schraubenmutter 9 zusammen mit einer Scheibe 10 gesichert. Die Scheibe 10 stützt sich randseitig in der Unterseite der Riegelplatte 4 ab und kann gegen Verdrehen gegenüber dem Achszapfen 3A gesichert sein, um ein ungewolltes Lösen der Mutter 9 zu verhindern. Selbstverständlich wird man diese auch direkt sichern.

Zur Montage des Riegelzapfens auf die Riegelplatte wird einfach das Federblech 5 durch die Ausnehmung des Achszapfen 3A gesteckt, der Kopf 3 mit dem Achszapfen 3A voran von oben in den Schaft 2 eingeführt und die Mutter 9 nebst der Scheibe 10 aufgedreht. In ebenso einfacher Weise kann der Kopf durch Lösen der Mutter 9 abgenommen werden, z. B. um das Federblech zu ersetzen.

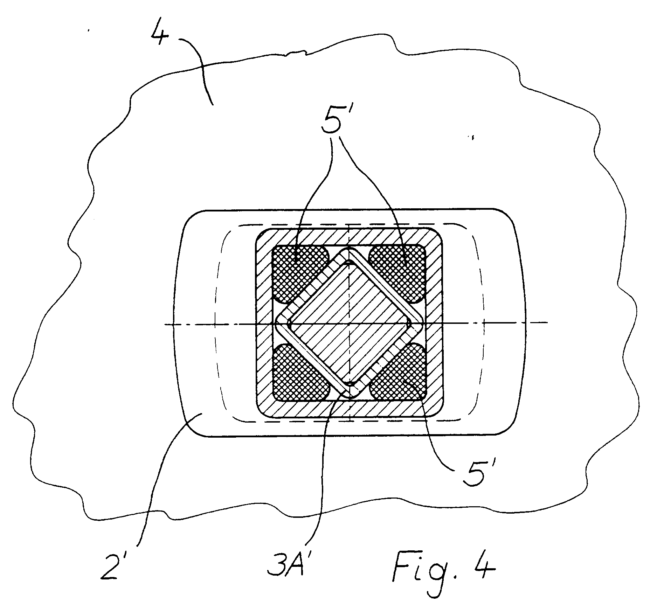

Selbstverständlich kann man auch andere Federbauformen (z. B. Spiral-oder Elastomerfedern) für die Bereitstellung der Rückstellkraft vorsehen.
So hat in Abwandlung gegenüber der in Fig. 2 gezeigten Bauform der Federrückstellung gemäß **Fig. 4** der auf der Riegelplatte 4 angeordnete Riegelzapfen einen Schaft 2' mit einer eckigen, vorzugsweise quadratischen Ausnehmung. Auch der darin eingesetzte Achszapfen 3A' des hier nicht gezeigten Kopfes ist eckig -vorzugsweise ebenfalls quadratisch-und in seiner Ruhestellung gegenüber der Ausnehmung bzw. gegenüber dem Schaft 2' um 45° verdreht.

In den zwischen dem Achszapfen und den Wänden der Ausnehmung verbleibenden, dreieckigen Freiräumen bzw. Ecken sind Elastomerfedern 5' angeordnet, die z. B. einfach als Abschnitte aus komprimierbarem Rundschnurgummi ausgeführt werden können. Offensichtlich ersetzt die Gesamtheit dieser Federn 5' die Blattfeder 5 aus dem ersten Ausführungsbeispiel, indem sie bei einer Verdrehung des Achszapfen 3A' elastisch zwischen den Ecken des Achszapfen 3A' und den Wänden der Ausnehmung im Schaft 2' komprimiert werden.

In der Arbeitsstellung des Riegelzapfens -hochgeschwenkte Riegelplatte-kann ein in Fig. 3 strichpunktiert angedeuteter Eckbeschlag eines Ladebehälters mit einem Kragen 11 auf den Riegelzapfen 1 aufgesetzt werden, wobei der Kragen eine auf den Grundriß des Schafts 2 (vgl. Fig. 2) abgestimmte längliche Öffnung hat. Seine Ränder werden den Kopf 3 über dessen oberseitige Anlaufschrägen durch die Gewichtskraft vorübergehend aus seiner Grundstellung in Kongruenz mit dem Schaft 2 drehen. Sobald der Ladebehälter ganz abgesenkt ist, d. h. auf der Ladefläche bzw. den Riegelplatten 4 steht, ist der Kopf 3 selbsttätig in Grundstellung zurückgestellt. Seine Unterkanten 7, 8 übergreifen dann die Innenkanten des Kragens 11 und sichern den Ladebehälter formschlüssig. Es versteht sich, daß die Länge des Schafts 2 der Dicke des Kragens 11 entsprechen sollte.

Die Stirnseite der Riegelplatte 4 hat nach Fig. 3 unten einen Vorsprung 4P, der in der Arbeitsstellung selbsttätig unter einen Haltesteg 12 gelangt, der im Untergestell des Transportfahrzeugs vorgesehen ist, um ein Abheben der Riegelplatte 4 zusammen mit der abhebenden Last zu verhindern. Wird nun der Ladebehälter bzw. der Eckbeschlag-Kragen 11 abgehoben, so laufen die Innenkanten des Kragens 11 an den Unterkanten 7, 8 des Kopfes 3 an und zwingen diesen wiederum vorübergehend in Kongruenz mit dem Schaft 2, bis der Ladebehälter abgehoben ist. Hernach schnappt der Kopf 3 durch die Federkraft bewegt wieder in Grundstellung zurück.

## Patentansprüche

1. Festlegevorrichtung zum Verriegeln von Ladebehältern wie Containern und Wechselbehältern während des Transports, umfassend einen Riegelzapfen (1) mit einem hohlen Schaft (2; 2') und einem in dem Schaft mit einem durchgesteckten Achszapfen (3A; 3A') drehbar geführten Kopf (3), der
- an seiner Oberseite Anlaufschrägen zum Unterstützen der Positionierung des Ladebehälters aufweist,
- wenigstens eine gegenüber dem Schaft (2; 2')
- zum Übergreifen von an der Unterseite der Ladebehälter vorgesehenen Widerlagern (Kragen 11), insbesondere Eckbeschlägen,
vorspringende Unterkante (7, 8) aufweist, und
- nur vorübergehend gegen die Kraft einer Feder (5; 5') durch Kontakt zwischen den Anlaufschrägen mit den Widerlagern (Kragen 11) selbst in eine das Aufsetzen und nachfolgende selbsttätige Verriegeln des Ladebehälters erlaubende Freigabestellung verdrehbar ist,
**dadurch gekennzeichnet**,
daß die Feder (5; 5') zwischen dem Schaft (2; 2') und dem Achszapfen (3A; 3A') wirkend innerhalb eines im Schaft (2; 2') vorgesehenen Freiraums angeordnet ist.

2. Festlegevorrichtung nach Anspruch 1,
**dadurch gekennzeichnet**,
daß der Kopf (3) auch an seinen vorspringenden Unterkanten (7, 8) Anlaufschrägen aufweist, über die er durch beim Anheben des Ladebehälters bewirkten Kontakt mit dessen Widerlager (11) vorübergehend in die das Abheben des Ladebehälters erlaubende Freigabestellung drehbar ist.

3. Festlegevorrichtung nach Anspruch 1 oder 2,
**dadurch gekennzeichnet**,
daß die Federkraft durch eine Biegefeder, insbesondere ein Federblech (5), erzeugt wird, die beim Verdrehen des Kopfes (3) gegenüber dem Schaft (2) elastisch verformbar ist.

4. Festlegevorrichtung nach Anspruch 3,
**dadurch gekennzeichnet**,
daß die als Federblech (5) ausgeführte Biegefeder längs einer Flügelkammer (6) innerhalb des hohen Schafts (2) angeordnet ist, sich beidseitig in deren spitzen Ecken abstützt und eine Ausnehmung eines mittig durch die Kammer (10) geführten Achszapfens (3A) des Kopfes (3) durchdringt.

5. Festlegevorrichtung nach Anspruch 1 oder 2,
**dadurch gekennzeichnet**,
daß die Federkraft durch mindestens eine zwischen dem Kopf und dem Schaft (2') angeordnete Elastomerfeder (5') erzeugt wird.

6. Festlegevorrichtung nach Anspruch 5,
**dadurch gekennzeichnet**,
daß der Achszapfen (3A') des Kopfes (3) eckig ist und verdrehbar in eine ebenfalls eckige Ausnehmung des hohen Schafts (2') eingesetzt ist, wobei in die zwischen den Ecken der Ausnehmung und des verdreht darin eingesetzten Achszapfen (3A') eingeschlossenen Freiräume beim Drehen des Kopfes (3) komprimierbare Elastomerfedern (5') angeordnet sind.

7. Festlegevorrichtung nach einem der vorstehenden Ansprüche,
**dadurch gekennzeichnet**,
daß der Riegelzapfen (1, 2, 3) nebst der Rückstelleinrichtung (5, 6) auf einer schwenkbar an dem Transportfahrzeug gelagerten Riegelplatte (4) montiert ist, die in Arbeitsstellung selbsttätig randseitig unter einen Haltesteg (12) im Untergestell des Transportfahrzeugs geführt wird.

8. Fahrzeug, **dadurch gekennzeichnet**,
daß es auf jeder Längsseite mit mindestens einer Festlegevorrichtung nach einem der vorstehenden Ansprüche ausgestattet ist.

## Claims

1. Securing means for locking loading containers, such as standard containers and interchangeable containers, during transportation, comprising a twistlock bolt (1) with a hollow shank (2; 2') and a head (3) which is guided rotatably in the shank by way of a pivot pin (3A; 3A'), plugged through said shank, and which
- has run-on slopes on its top side for the purpose of assisting the positioning of the loading container,
- has at least one bottom edge (7, 8) which protrudes with respect to the shank (2; 2')
- for the purpose of engaging over abutments (collar 11) provided on the underside of the loading containers, in particular corner fittings, and
- can be rotated just temporarily counter to the force of a spring (5; 5'), by contact between the run-on slopes and the abutments (collar 11) themselves, into a release position, in which it is possible for the loading container to be placed in position and subsequently locked automatically,
characterized in that the spring (5; 5'), acting between the shank (2; 2') and the pivot pin (3A; 3A'), is arranged within a free space provided in the shank (2; 2').

2. Securing means according to Claim 1, characterized in that the head (3) also has run-on slopes on its protruding bottom edges (7, 8), via which slopes, by contact with the loading-container abutment (11) which is brought about when said container is lifted, the head can be rotated temporarily into the release position, in which it is possible for the loading container to be lifted off.

3. Securing means according to Claim 1 or 2, characterized in that the spring force is produced by a flexion spring, in particular a spring plate (5), which can be deformed elastically when the head (3) is rotated with respect to the shank (2).

4. Securing means according to Claim 3, characterized in that the flexion spring, designed as a spring plate (5), is arranged along a wing-form chamber (6) within the hollow shank (2), is supported on both sides in the acute-angled corners of said chamber, and passes through a recess in a pivot pin (3A) of the head (3), said pivot pin being guided centrally through the chamber (6).

5. Securing means according to Claim 1 or 2, characterized in that the spring force is produced by at least one elastomeric spring (5') arranged between the head and the shank (2').

6. Securing means according to Claim 5, characterized in that the pivot pin (3A') of the head (3) has corners and is inserted rotatably in a recess, which. likewise has corners, in the hollow shank (2'), elastomeric springs (5') which can be compressed when the head (3) is rotated being arranged in the free spaces enclosed between the corners of the recess and of the pivot pin (3A') inserted in a rotated state therein.

7. Securing means according to one of the preceding claims, characterized in that the twistlock bolt (1, 2, 3), together with the restoring device (5, 6), is fitted on a locking plate (4) which is mounted pivotably on the transporting vehicle and, in the operating position, is automatically guided, by way of its borders, beneath the retaining web (12) in the undercarriage of the transporting vehicle.

8. Vehicle, characterized in that, on each long side, it is equipped with at least one securing means according to one of the preceding claims.

## Revendications

1. Dispositif de positionnement pour verrouiller des conteneurs tels que des containers et des conteneurs interchangeables pendant le transport, comprenant un boulon de verrouillage (1) avec une tige creuse (2; 2') et avec une tête (3) guidée de façon rotative dans la tige avec un tourillon traversé (3A; 3A'), qui
- présente à sa face supérieure des chanfreins d'abordage pour faciliter le positionnement du conteneur,
- présente au moins une arête inférieure (7, 8) en saillie par rapport à la tige (2; 2')
- pour déborder au-dessus de butées (bord 11), en particulier des équerres, prévues à la face inférieure des conteneurs,
- et ne peut tourner que de façon passagère contre la force d'un ressort (5; 5') par contact entre les chanfreins d'abordage avec les butées (bord 11) elles-mêmes dans une position de libération permettant la pose et le verrouillage automatique ultérieur du conteneur,
caractérisé en ce que
- le ressort (5; 5,) est disposé à l'intérieur d'un espace libre prévu dans la tige (2; 2') pour agir entre la tige (2; 2') et le tourillon (3A; 3A').

2. Dispositif de positionnement suivant la revendication 1, caractérisé en ce que la tête (3) présente aussi à ses arêtes inférieures en saillie (7, 8) des chanfreins d'abordage, par l'intermédiaire desquels elle peut, par le contact provoqué lors du soulèvement du conteneur avec la butée (11) de celui-ci, tourner de façon passagère dans la position de libération permettant le soulèvement du conteneur.

3. Dispositif de positionnement suivant la revendication 1 ou 2, caractérisé en ce que la force du ressort est produite par un ressort spiral, en particulier une tôle élastique (5), qui peut être élastiquement déformée lors de la rotation de la tête (3) par rapport à la tige (2).

4. Dispositif de positionnement suivant la revendication 3, caractérisé en ce que le ressort spiral constitué par une tôle élastique (5) est disposé le long d'une chambre à ailettes (6) à l'intérieur de la tige creuse (2), prend appui des deux côtés dans les angles aigus de celle-ci et traverse une cavité d'un tourillon (3A) de la tête (3) guidé au milieu à travers la chambre (10).

5. Dispositif de positionnement suivant la revendication 1 ou 2, caractérisé en ce que la force de ressort est produite par au moins un ressort en élastomère (5') disposé entre la tête et la tige (2').

6. Dispositif de positionnement suivant la revendication 5, caractérisé en ce que le tourillon (3A') de la tête (3) est polygonal et est placé de façon rotative dans une cavité également polygonale de la tige creuse (2'), des ressorts en élastomère (5'), comprimables lors de la rotation de la tête (3), étant disposés dans les espaces libres enfermés entre les angles de la cavité et le tourillon (3A') introduit en position tournée dans celle-ci.

7. Dispositif de positionnement suivant l'une quelconque des revendications précédentes, caractérisé en ce que le boulon de verrouillage (1, 2, 3) est monté à côté du dispositif de rappel (5, 6) sur une plaque de verrouillage (4) supportée de façon pivotante sur le véhicule de transport, qui est guidée automatiquement, en position de travail, par le bord sous une nervure de maintien (12) dans le châssis inférieur du véhicule de transport.

8. Véhicule, caractérisé en ce qu'il est équipé sur chaque long côté d'au moins un dispositif de positionnement suivant l'une quelconque des revendications précédentes.
